Europäisches Patentamt

European Patent Office

Office européen des brevets

(11) Numéro de publication: **0 281 464**
**A1**

(12) # DEMANDE DE BREVET EUROPEEN

(21) Numéro de dépôt: **88400370.8**

(51) Int. Cl.⁴: **C 08 F 6/00**

(22) Date de dépôt: **18.02.88**

(30) Priorité: **19.02.87 FR 8702114**

(43) Date de publication de la demande:
**07.09.88 Bulletin 88/36**

(84) Etats contractants désignés:
**AT BE CH DE ES FR GB IT LI LU NL SE**

(71) Demandeur: **RHONE-POULENC SANTE**
**Les Miroirs 18 Avenue d'Alsace**
**F-92400 Courbevoie Cédex (FR)**

(72) Inventeur: **Bourrain, Paul**
**32/0 Chemin des Peupliers**
**F-69570 Dardilly (FR)**

**Collas, Gérard**
**406 avenue du 8 mai 1945**
**F-69300 Caluire (FR)**

**Rostaing, Jean-François**
**Chuzelles Village**
**F-38200 Vienne (FR)**

**Sagi, François**
**3 bis rue des Lilas**
**F-69008 Lyon (FR)**

(74) Mandataire: **Pilard, Jacques et al**
**RHONE-POULENC INTERSERVICES Service Brevets**
**Pharma 25, Quai Paul Doumer**
**F-92408 Courbevoie Cédex (FR)**

(54) **Procédé de purification de copolymères du styrène avec les vinylpyridines par extraction au moyen d'un gaz supercritique.**

(57) Procédé de purification d'un copolymère basique (copolymère du styrène avec les vinylpyridines) par extraction au moyen de gaz carbonique supercritique.

EP 0 281 464 A1

**Description**

## PROCEDE DE PURIFICATION DE COPOLYMERES DU STYRENE AVEC LES VINYLPYRIDINES PAR EXTRACTION AU MOYEN D'UN GAZ SUPERCRITIQUE

La présente invention concerne un procédé de purification de copolymères basiques par extraction au moyen d'un gaz supercritique.

Plus particulièrement, la présente invention concerne un procédé de purification de copolymères du styrène avec la vinyl-2-, la vinyl-4 ou la méthyl-2 vinyl-5 pyridine contenant de 10 à 50 % en poids de styrène et dont la masse moléculaire moyenne en nombre est comprise entre 100.000 et 150.000.

Il est connu, par exemple d'après les demandes de brevets européens EP 77 264 et EP 188 953, de préparer des compositions destinées à l'alimentation des ruminants dans lesquelles la substance active, par exemple un aminoacide essentiel tel que la méthionine ou la lysine est enrobée par une composition qui est stable dans un milieu dont le pH est supérieur à 5,5 et qui permet la libération de la substance active dans un milieu dont le pH est inférieur à 3,5. Parmi les constituants de l'enrobage sont utilisés des copolymères basiques tels que les copolymères du styrène avec les vinylpyridines.

Les copolymères qui sont obtenus par les procédés habituels de polymérisation sont généralement souillés par des monomères résiduels et par des oligomères et éventuellement par des produits de dégradation de l'initiateur de polymérisation.

Pour que les copolymères soient acceptables du point de vue alimentaire, il est nécessaire que la teneur en impuretés (monomères résiduel, oligomères) soit aussi faible que possible c'est-à-dire inférieure à 1 ppm et de préférence inférieure à 0,2 ppm.

Divers procédés de purification des copolymères du styrène avec les vinylpyridines sont connus.

Par exemple, un procédé consiste à entraîner par la vapeur d'eau les monomères résiduels. Cependant ce procédé ne permet d'obtenir que des teneurs en monomères résiduels voisines de 10 ppm. De plus, la mise en oeuvre d'un tel procédé rend difficile l'élimination des oligomères et, éventuellement, des produits de dégradation de l'initiateur de polymérisation.

La demande de brevet européen EP 0 020 279 enseigne la purification de polymères polaires par un procédé qui consiste à dissoudre le polymère dans un solvant organique convenable, à réticuler le polymère avec un agent de réticulation tel que l'acide succinique pour former un polymère réticulé insoluble de haut poids moléculaire, à solubiliser le polymère réticulé puis à précipiter l'agent de réticulation et enfin à séparer le polymère purifié.

La séparation des produits de haut et bas poids moléculaire peut aussi être effectuée selon le procédé décrit dans la demande de brevet européen EP 0 176 642 qui consiste à dissoudre sélectivement les monomères résiduels et les produits de bas poids moléculaire en fonction des différences de pKa entre les produits de haut poids moléculaire et ceux de bas poids moléculaire.

Cependant, si ces procédés peuvent conduire à des résultats satisfaisants, leur mise en oeuvre est longue et délicate.

Par ailleurs, il est connu, d'après la demande de brevet japonais JP 84/189 595 de purifier, par extraction au moyen de gaz carbonique supercritique, des polyacétylènes dont la nature et les propriétés sont différentes de celles des copolymères basiques.

Il a maintenant été trouvé, et c'est ce qui fait l'objet de la présente invention, qu'un copolymère styrène-vinylpyridine peut être purifié par extraction au moyen d'un gaz supercritique tel que le gaz carbonique supercritique. De cette manière, il est possible d'obtenir un copolymère dans lequel la teneur en monomères résiduels est inférieure ou égale à 1 ppm.

Comparés aux solvants liquides, les fluides supercritiques ont une plus grande possibilité de diffusion et une masse volumique et une viscosité plus faibles. Avec une viscosité sensiblement plus faible et une possibilité de diffusion plus importante, les fluides supercritiques peuvent être des produits de choix pour réaliser des extractions sélectives.

Pour réaliser une extraction sélective au moyen d'un fluide supercritique dans des conditions de température et de pression industriellement acceptables, il est nécessaire que le fluide supercritique ait des données critiques convenables (température, pression) et présente via-à-vis du produit à purifier un pouvoir solubilisant suffisant.

Le gaz carbonique, dont les coordonnées critiques sont de 31°C pour la température et de 73 bars pour la pression, constitue un fluide particulièrement avantageux pour la mise en oeuvre du procédé selon l'invention.

Il a été trouvé que l'on effectue une bonne séparation des impuretés contenues dans un copolymère styrène-vinyl-2 pyridine au moyen de gaz carbonique supercritique en opérant à une température comprise entre 35 et 60°C et à une pression comprise entre 80 et 250 bars et, de préférence, entre 200 et 240 bars.

Le procédé selon l'invention consiste à mettre en présence dans un réacteur le gaz carbonique supercritique et le produit brut de copolymérisation du styrène avec une vinylpyridine puis à faire passer un courant de gaz carbonique supercritique dans le réacteur en équilibre (température, pression) et à récupérer à une température comprise entre 25 et 30°C et à une pression comprise entre 40 et 70 bars les extraits entraînés dont la composition est contrôlée par des méthodes de détection appropriées. Après élimination des produits "légers", le copolymère purifié est soutiré du réacteur.

Le procédé selon l'invention permet d'obtenir directement un copolymère purifié sans qu'il soit nécessair d'effectuer des traitements supplémentaires, le gaz carbonique étant directement éliminé.

Les exemples suivants, donnés à titre non limitatif, montrent comment l'invention peut être mise en pratique.

## EXEMPLES 1 à 3

a) Préparation du copolymère styrène-vinyl-2-pyridine

Dans 250 litres d'eau contenant 0,5 % d'agent tensio-actif amphiphile (Rhodoviol 25/140), à la température de 65°C, on ajoute, en 1 heure, 100 kg d'un mélange de styrène et de vinyl-2 pyridine (30-70 en poids) contenant 1 % d'initiateur (azobisisobutyronitrile). On poursuit la polymérisation pendant 22 heures.

On effectue alors un entraînement à la vapeur d'eau sous pression réduite à une température voisine de 65-75°C pendant 6 heures. Le volume condensé est voisin de 100 litres.

On effectue ensuite un entraînement à la vapeur d'eau à la pression atmosphérique à une température voisine de 95-100°C pendant 6 heures. Le volume condensé est voisin de 200 litres.

Après refroidissement, le copolymère styrène-vinyl-2 pyridine est séparé par filtration, lavé par trempage par 250 litres d'eau, essoré puis séché sous pression réduit (20 mm de mercuré ; 2,7 kPa) pendant 48 heures à 65°C puis pendant 24 heures à 80°C.

Le copolymère ainsi obtenu présente les caractéristiques suivantes :
- teneur en azote .................... 9,10 %
- composition styrène/vinyl-2 pyridine ...... 31,5/68,5 en poids
- viscosité spécifique (diméthylformamide, c = 0,5 à 20°C) ...... 0,610
- monomères résiduels : styrène ...... voisin de 10 ppm
          vinyl-2 pyridine ...... voisin de 10 ppm
- tétraméthylsuccinonitrile .......... voisin de 110 ppm
- masse moléculaire (en nombre) $\overline{Mn}$ .... 126.000
- masse moléculaire (en poids) $\overline{Mw}$ ... 395.000
  $\dfrac{\overline{Mw}}{\overline{Mn}}$ ... 3,13

b) Extraction par le gaz carbonique supercritique

Dans un autoclave d'extraction d'un volume de 300 cm3, on introduit un tube cylindrique fermé à ses extrémités par deux plaques de verre fritté (porosité : 10 μm) contenant le copolymère à purifier.

Le réacteur est thermostaté à la température désirée puis on admet du gaz carbonique jusqu'à atteindre une pression de 220 bars.

La pression est ensuite régulée par un déverseur.

L'ensemble du système étant en équilibre, on fait passer un courant de gaz carbonique supercritique au débit de 2,9 kg/heure.

Les extraits sont récupérés, au-delà du déverseur, dans un autoclave de séparation. muni d'une double enveloppe, à une température voisine de 30°C et à une pression de 50 à 60 bars. La durée de l'extraction varie de 2 à 6 heures.

L'autoclave de séparation comporte deux regards en verre permettant de visualiser le niveau du gaz carbonique liquide. Par admission d'eau chaude dans la double enveloppe, le gaz carbonique est distillé sous pression en continu.

Les extraits sont isolés après lavage de l'autoclave de séparation avec un mélange chlorure de méthylène-éthanol (1-1 en volumes) et évaporation du solvant.

Les constituants des extraits secs sont identifiés par spectrophotométrie infra-rouge, spectra de masse et spectre de résonance magnétique nucléaire.

Le copolymères purifié, qui est soutiré de l'extracteur, est analysé par chromatographie en phase gazeuse afin de déterminer la teneur en monomères résiduels.

Les résultats des différents essais sont rassemblés dans le Tableau I :

0 281 464

## TABLEAU I

| | Paramètres | Exemple 1 | Exemple 2 | Exemple 3 |
|---|---|---|---|---|
| Conditions de mise en oeuvre du procédé | Poids (g) de copolymère styrène-vinyl-2 pyridine | 105,35 | 54,37 | 53,10 |
| | Conditions d'extraction | | | |
| | - pression (bars) | 220 | 220 | 220 |
| | - température (°C) | 40 | 40 | 60 |
| | - densité du $CO_2$ super-critique | 0,86 | 0,86 | 0,75 |
| | - débit de $CO_2$ (kg/h) | 2,9 | 2,9 | 2,9 |
| | Conditions de séparation | | | |
| | - pression (bars) | 50 | 60 | 60 |
| | - température (°C) | 29 | 30 | 30 |
| Résultats | Variation du poids du copolymère (cumulé en g) après : 1 heure | - | 0,60 | 0,60 |
| | 2 heures | 1,05 | 0,60 | 0,61 |
| | 3 heures | - | 0,60 | 0,61 |
| | 6 heures | 1,15 | - | - |
| | Taux d'extraction % après : 1 heure | | 1,10 | |
| | 2 heures | | | 1,15 |
| | 6 heures | 1,1 | | |
| | Concentration en mono-mères (styrène) dans le copolymère | 1-2 ppm | 1-2 ppm | inférieur à 1 ppm |

## Revendications

1 - Procédé de purification d'un copolymère de styrène avec une vinylpyridine caractérisé en ce que l'on soumet le copolymère contenant des monomères résiduels à une extraction sélective au moyen de gaz carbonique supercritique et récupère le copolymère purifié.

2 - Procédé selon la revendication 1 caractérisé en ce que l'extraction sélective est effectuée à une température comprise entre 35 et 60°C et à une pression comprise entre 80 et 250 bars.

4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | DE-A-3 323 940 (HOECHST)<br>* Revendications; page 2, lignes 1-11; page 3, ligne 11 - page 4, ligne 24; page 4, lignes 35-38; exemples *<br>--- | 1,2 | C 08 F 6/00 |
| Y | EP-A-0 142 894 (STAMICARBON)<br>* Revendications *<br>--- | 1,2 | |
| Y | EP-A-0 183 314 (STAMICARBON)<br>* Revendications *<br>--- | 1,2 | |
| Y | EP-A-0 071 793 (BASF)<br>* Revendication; page 4, ligne 26; exemple no. 1 *<br>--- | 1,2 | |
| Y | EP-A-0 068 146 (BASF)<br>* Revendication; page 4, ligne 28; exemple no. 1 *<br>--- | 1,2 | |
| Y | EP-A-0 176 642 (EASTMAN KODAK)<br>* Revendications; page 1, ligne 30 - page 2, ligne 10; page 3, lignes 4-11; page 4, ligne 12 *<br>----- | 1,2 | **DOMAINES TECHNIQUES RECHERCHES (Int. Cl.4)**<br><br>C 08 F |

Le présent rapport a été établi pour toutes les revendications

| Lieu de la recherche | Date d'achèvement de la recherche | Examinateur |
|---|---|---|
| LA HAYE | 19-05-1988 | HALLEMEESCH A.D. |